# EUROPEAN PATENT APPLICATION

(11) **EP 3 836 660 A1**
(43) Date of publication of application: **16.06.2021**
(21) Application number: 18929205.5
(22) Date of filing: 08.11.2018
(51) Int. Cl.: H04W 72/02, H04W 4/46, H04W 28/04, H04W 72/04, H04W 92/18

(54) **TERMINAL DEVICE, WIRELESS COMMUNICATION DEVICE, WIRELESS COMMUNICATION SYSTEM, AND WIRELESS COMMUNICATION METHOD**

(30) Priority: 07.08.2018 WO PCT/JP2018/029694
(71) Applicant: FUJITSU LIMITED, Kanagawa, 211-8588 (JP)
(72) Inventor: WU, Jianming, Kanagawa 211-8588 (JP)
(74) Representative: Haseltine Lake Kempner LLP
(86) International application number: PCT/JP2018/041550
(87) International publication number: WO 2020/031397

(57) **Abstract**

A terminal device includes a selecting unit that autonomously selects a first resource for transmission of data from among a plurality of resources; a first transmitting unit that transmits the data to another terminal device by using the first resource; a receiving unit that receives control information that has been transmitted from a wireless communication device capable of performing communication with the own terminal device and that designates a second resource that is not overlapped with the first resource; and a repetitive transmitting unit that retransmits the data to the other terminal device by using the second resource designated by the control information.

## Description

### [Technical Field]

The present invention relates to a terminal device, a wireless communication device, a wireless communication system, and a wireless communication method.

### [Background Art]

In the current networks, traffic of mobile terminals (smartphones and feature phones) occupies most of network resources. Furthermore, traffic used by mobile terminals tends to be continuously increased in the future.

In contrast, with the development of Internet of things (IoT) services (for example, monitoring systems, such as transportation systems, smart meters, devices, and the like), there is a need to cope with services having various request conditions. Thus, in the communication standards for the next generation (for example, the fifth generation mobile unit communication (5G)), in addition to the standard technology of the fourth generation mobile unit communication (4G), there is a demand for a technology that implements high-data-rate, high-capacity, and low-delay communication. Furthermore, regarding the fifth generation communication standards, technical studies are being conducted in 3GPP working groups (for example, TSG-RAN WG1, TSG-RAN WG2, and the like).

As described above, in 5G, in order to respond various kinds of services, support of a lot of use cases classified into enhanced mobile broadband (eMBB), machine type communications (Massive MTC), and ultra-reliable and low latency communication (URLLC) is conceived.

Furthermore, in the 3GPP working groups, Device to Device (D2D) communication and Vehicle to Everything (V2X) communication are also discussed. In D2D communication and V2X communication, communication is performed by using, for example, sidelink channels. Furthermore, an example of V2X communication includes, for example, Vehicle to Vehicle (V2V) indicating communication between automobiles; Vehicle to Pedestrian (V2P) indicating communication between automobiles and pedestrians; Vehicle to Infrastructure (V2I) indicating communication between automobiles and road infrastructures, such as indicators; Vehicle to Network (V2N) indicating communication between automobiles and networks; and the like.

Furthermore, in V2X communication, repetition in which the same data is repeatedly transmitted is introduced as a method for ensuring reliability that is requested with respect to the communication standards of the next generation.

### [Citation List]

### [Non Patent Literature]

Non Patent Literature 1: 3GPP TS 22.186 V15.2.0 (2017-09)
Non Patent Literature 2: 3GPP TS 36.211 V15.1.0 (2018-03)
Non Patent Literature 3: 3GPP TS 36.212 V15.1.0 (2018-03)
Non Patent Literature 4: 3GPP TS 36.213 V15.1.0 (2018-03)
Non Patent Literature 5: 3GPP TS 36.300 V15.1.0 (2018-03)
Non Patent Literature 6: 3GPP TS 36.321 V15.1.0 (2018-03)
Non Patent Literature 7: 3GPP TS 36.322 V15.0.1 (2018-04)
Non Patent Literature 8: 3GPP TS 36.323 V14.5.0 (2017-12)
Non Patent Literature 9: 3GPP TS 36.331 V15.1.0 (2018-03)
Non Patent Literature 10: 3GPP TS 36.413 V15.1.0 (2018-03)
Non Patent Literature 11: 3GPP TS 36.423 V15.1.0 (2018-03)
Non Patent Literature 12: 3GPP TS 36.425 V14.1.0 (2018-03)
Non Patent Literature 13: 3GPP TS 37.340 V15.1.0 (2018-03)
Non Patent Literature 14: 3GPP TS 38.201 V15.0.0 (2017-12)
Non Patent Literature 15: 3GPP TS 38.202 V15.1.0 (2018-03)
Non Patent Literature 16: 3GPP TS 38.211 V15.1.0 (2018-03)
Non Patent Literature 17: 3GPP TS 38.212 V15.1.1 (2018-04)
Non Patent Literature 18: 3GPP TS 38.213 V15.1.0 (2018-0312)
Non Patent Literature 19: 3GPP TS 38.214 V15.1.0 (2018-03)
Non Patent Literature 20: 3GPP TS 38.215 V15.1.0 (2018-03)
Non Patent Literature 21: 3GPP TS 38.300 V15.1.0 (2018-03)
Non Patent Literature 22: 3GPP TS 38.321 V15.1.0 (2018-03)
Non Patent Literature 23: 3GPP TS 38.322 V15.1.0 (2018-03)
Non Patent Literature 24: 3GPP TS 38.323 V15.1.0 (2018-03)
Non Patent Literature 25: 3GPP TS 38.331 V15.1.0 (2018-03)
Non Patent Literature 26: 3GPP TS 38.401 V15.1.0 (2018-03)
Non Patent Literature 27: 3GPP TS 38.410 V0.9.0 (2018-04)
Non Patent Literature 28: 3GPP TS 38.413 V0.8.0 (2018-04)
Non Patent Literature 29: 3GPP TS 38.420 V0.8.0 (2018-04)
Non Patent Literature 30: 3GPP TS 38.423 V0.8.0 (2018-04)
Non Patent Literature 31: 3GPP TS 38.470 V15.1.0 (2018-03)
Non Patent Literature 32: 3GPP TS 38.473 V15.1.1 (2018-04)
Non Patent Literature 33: 3GPP TR 38.801 V14.0.0 (2017-04)
Non Patent Literature 34: 3GPP TR 38.802 V14.2.0 (2017-09)
Non Patent Literature 35: 3GPP TR 38.803 V14.2.0 (2017-09)
Non Patent Literature 36: 3GPP TR 38.804 V14.0.0 (2017-03)
Non Patent Literature 37: 3GPP TR 38.900 V14.3.1 (2017-07)
Non Patent Literature 38: 3GPP TR 38.912 V14.1.0 (2017-06)
Non Patent Literature 39: 3GPP TR 38.913 V14.3.0 (2017-06)
Non Patent Literature 40: 3GPP TSG RAN #80, RP-180602, "Status Report for RAN WG1 to TSG-RAN #80", La Jolla, USA 11h-14th June, 2018.
Non Patent Literature 41: 3GPP TSG RAN #80, RP-181429, "New SID: Study on NR V2X", La Jolla, USA 11h-14th June, 2018.
Non Patent Literature 42: 3GPP TR 22.886, "Study on enhancement of 3GPP Support for 5G V2X Services", V15.1.0, March 2017.
Non Patent Literature 43: 3GPP, "Evolved Universal Terrestrial Radio Access (E-UTRA); Physical layer procedures (v14.3.0, Release 14)," 3GPP, Tech. Rep. 36.213, June 2017.
Non Patent Literature 44: R. M. Masegosa, and J. Gozalvez, "LTE-V for Sidelink 5G V2X Vehicular Communications: A New 5G Technology for Short-Range Vehicle-to-Everything Communications", IEEE Vehicular Technology Magazine, Pages: 30-39, Volume-2, Issue-4, 2017.
Non Patent Literature 45: 3GPP TS 36.212, "Evolved Universal Terrestrial Radio Access (E-UTRA); Multiplexing and channel coding", V14.5.0, Dec. 2017.
Non Patent Literature 46: 3GPP TS 36.213, "Evolved Universal Terrestrial Radio Access (E-UTRA); Physical layer procedures", V14.5.0, Dec. 2017.
Non Patent Literature 47: 3GPP TS 23.285, "Technical Specification Group Services and System Aspects; Architecture enhancements for V2X services", V14.5.0, Dec. 2017.

### [Summary of Invention]

### [Technical Problem]

Incidentally, when initial transmission and repetition are performed in V2X communication, the resource for transmission of data and the resource for retransmission of data are autonomously selected by an automobile. Accordingly, when the same resource is selected by a plurality of automobiles, a probability of collision of pieces of data in the subject resource is increased and, as a result, there is a problem in that it is difficult to satisfy the request for low delay and high reliability.

Accordingly, it is an object in one aspect of an embodiment of the present invention to provide a terminal device, a wireless communication device, a wireless communication system, and a wireless communication method that can implement V2X communication that satisfies the request for low delay and high reliability.

### [Solution to Problem]

According to an aspect of an embodiment, a terminal device includes a selecting unit that autonomously selects a first resource for transmission of data from among a plurality of resources; a first transmitting unit that transmits the data to another terminal device by using the first resource; a receiving unit that receives control information that has been transmitted from a wireless communication device capable of performing communication with the own terminal device and that designates a second resource that is not overlapped with the first resource; and a repetitive transmitting unit that retransmits the data to the other terminal device by using the second resource designated by the control information.

### [Advantageous Effects of Invention]

According to an aspect of the terminal device disclosed in the present invention, an advantage is provided in that it is possible to implement V2X communication that satisfies the request for low delay and high reliability.

### [Brief Description of Drawings]

FIG. 1 is a diagram illustrating an example of a configuration of a wireless communication system according to a first embodiment.
FIG. 2 is a diagram illustrating an example of a functional configuration of a terminal device according to the first embodiment.
FIG. 3 is a diagram illustrating an example of a functional configuration of a base station device according to the first embodiment.
FIG. 4 is a sequence diagram illustrating an example of an operation of the wireless communication system according to the first embodiment.
FIG. 5 is a diagram illustrating a specific example of the operation of the wireless communication system according to a comparative example 1.
FIG. 6 is a diagram illustrating a specific example of the operation of the wireless communication system according to a comparative example 2.
FIG. 7 is a diagram illustrating a specific example of the operation of the wireless communication system according to a comparative example 3.
FIG. 8 is a diagram illustrating a specific example of the operation of the wireless communication system according to the first embodiment.
FIG. 9 is a diagram illustrating an example of a functional configuration of a terminal device according to a second embodiment.
FIG. 10 is a diagram illustrating an example of a functional configuration of a base station device according to the second embodiment.
FIG. 11 is a sequence diagram illustrating an example of an operation of a wireless communication system according to the second embodiment.
FIG. 12 is a sequence diagram illustrating an example of an operation of a wireless communication system 1 when the base station device transmits, by itself, data to a terminal device.
FIG. 13 is a diagram illustrating an example of a hardware configuration of the terminal device.
FIG. 14 is a diagram illustrating an example of a hardware configuration of the base station device.
FIG. 15 is a diagram illustrating an example of a configuration of a wireless communication system according to a third embodiment.
FIG. 16 is a diagram illustrating an example of a functional configuration of a terminal device according to the third embodiment.
FIG. 17 is a diagram illustrating an example of a functional configuration of a management terminal device according to the third embodiment.
FIG. 18 is a sequence diagram illustrating an example of an operation of the wireless communication system according to the third embodiment.
FIG. 19 is a diagram illustrating an example of a functional configuration of a terminal device according to a fourth embodiment.
FIG. 20 is a diagram illustrating an example of a functional configuration of a management terminal device according to the fourth embodiment.
FIG. 21 is a sequence diagram illustrating an example of an operation of a wireless communication system according to the fourth embodiment.
FIG. 22 is a diagram illustrating an example of a functional configuration of a management terminal device according to a fifth embodiment.
FIG. 23 is a diagram illustrating a specific example 1 of a change in the ratio of the size of a first resource pool to the size of a second resource pool.
FIG. 24 is a diagram illustrating a specific example 2 of a change in the ratio of the size of the first resource pool to the size of the second resource pool.
FIG. 25 is a diagram illustrating an example of a hardware configuration of the management terminal device.

### [Embodiments for Carrying Out the Invention]

Preferred embodiments of a terminal device, a wireless communication device, a wireless communication system, and a wireless communication method disclosed in the present invention will be explained in detail below with reference to the accompanying drawings. Furthermore, the present invention is not limited to the embodiments. Furthermore, in the embodiments, components having the same functions are assigned the same reference numerals and descriptions of overlapped portions will be omitted.

### First Embodiment

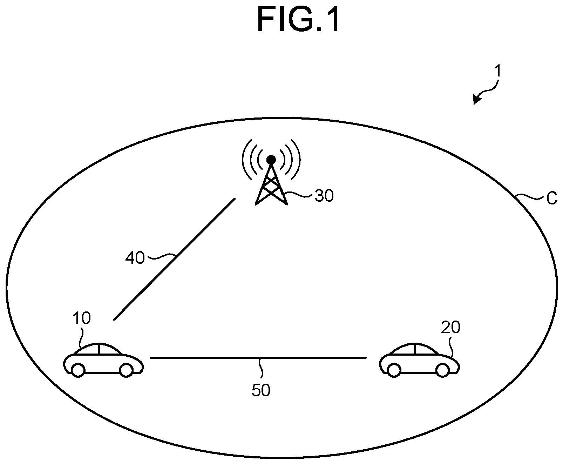

FIG. 1 is a diagram illustrating an example of a configuration of a wireless communication system 1 according to a first embodiment. The wireless communication system 1 illustrated in FIG. 1 includes a terminal device 10, a terminal device 20, and a base station device 30. The terminal device 10 and the terminal device 20 are present within the range of a cell C formed by the base station device 30. The terminal device 10 and the terminal device 20 are, for example, automobiles. The base station device 30 is, for example, a gNB or a road side unit (RSU) as the next generation Node B. Both of the terminal device 10 and the base station device 30 are connected by a radio link 40 and both of the terminal device 10 and the terminal device 20 are connected by a radio link 50. The radio link 40 is called a Uu link, and the radio link 50 is called a sidelink or a PC5 link. Furthermore, FIG. 1 illustrates an example in which both of the terminal device 10 and the terminal device 20 are present within the range of the cell C; however, it is assumed that other terminal devices (not illustrated) are also present within the range of the cell C.

The terminal device 10 transmits, in the radio link 50, control information on a sidelink (SCI: sidelink control information) together with data to the terminal device 20. The SCI is transmitted via, for example, the physical sidelink control channel (PSCCH) that is a control channel of the sidelink. The data is transmitted via, for example, the physical sidelink shared channel (PSSCH) that is a data channel of the sidelink. Furthermore, the terminal device 10 repeatedly transmits the same data. Namely, when data corresponding to the transmission target is generated, the terminal device 10 autonomously selects a "first resource" for transmission of the data from among a plurality of resources and transmits the data by using the first resource. Furthermore, as the timing at which the data corresponding to the transmission target is generated, periodic timing or non-periodic timing is present. Then, the terminal device 10 receives control information on a downlink (DCI: downlink control information) that has been transmitted from the base station device 30 and that designates a "second resource" that is not overlapped with the first resource. Then, the terminal device 10 retransmits the data to the terminal device 20 by using the second resource designated by the DCI.

The base station device 30 judges, by identifying the PSCCH for the first resource, whether the reception quality of the data in the terminal device 20 is favorable. Then, when it is judged that the reception quality of the data is not favorable, the base station device 30 selects the second resource that is used by the terminal device 10 to retransmit the data and that is not overlapped with the first resource. Then, the base station device 30 transmits the DCI that designates the second resource to the terminal device 10. The DCI is transmitted via a physical downlink control channel (PDCCH) that is a control channel of the downlink. The base station device 30 is an example of a wireless communication device.

In this way, in the wireless communication system 1, after the terminal device 10 autonomously selects the first resource and transmits the data, the terminal device 10 retransmits the data by using the second resource that has been designated by the DCI transmitted from the base station device 30. Consequently, because communication between the terminal device 10 and the base station device 30 is omitted at the time of initial transmission of the data performed by the terminal device 10, a delay in the sidelink is suppressed. Furthermore, because the resource designated by the base station device 30 using the DCI is used at the time of the retransmission of the data performed by the terminal device 10, the resource used between the terminal device 10 and another terminal device in the cell C does not collide; therefore, a probability of collision of pieces of data is reduced. As a result, it is possible to implement V2X communication that satisfies a request for low delay and high reliability.

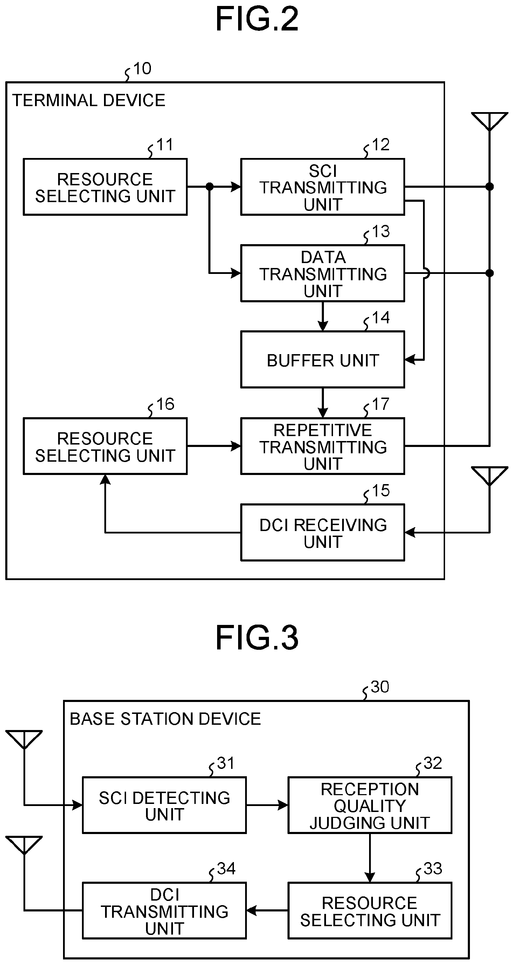

FIG. 2 is a diagram illustrating an example of a functional configuration of the terminal device 10 according to the first embodiment. As illustrated in FIG. 2, the terminal device 10 includes a resource selecting unit 11, an SCI transmitting unit 12, a data transmitting unit 13, a buffer unit 14, a DCI receiving unit 15, a resource selecting unit 16, and a repetitive transmitting unit 17.

When data corresponding to the transmission target is generated, the resource selecting unit 11 autonomously selects the first resource for transmission of the data from among the plurality of resources. Here, the plurality of resources are included in a resource pool in, for example, a mode 4 that has been introduced as one of the communication modes of V2X communication.

The SCI transmitting unit 12 transmits an SCI that indicates the location of the first resource to the terminal device 20. For the transmission of the SCI, for example, an SCI format 1 having a plurality of fields that are previously prescribed in the communication standards of V2X communication is used. The SCI indicating the location of the first resource reaches not only the terminal device 20 but also the base station device 30 that forms the cell C in which the terminal device 20 is present. Furthermore, the SCI transmitting unit 12 may also transmit control information on an uplink (UCI: uplink control information) indicating the location of the first resource to the base station device 30 via a physical uplink control channel (PUCCH) that is a control channel of the uplink. The SCI transmitting unit 12 is an example of the second transmitting unit.

The data transmitting unit 13 transmits data to the terminal device 20 by using the first resource. The data transmitting unit 13 is an example of the first transmitting unit.

The buffer unit 14 is a storage area that temporarily stores therein the SCI transmitted from the SCI transmitting unit 12 and the data transmitted from the data transmitting unit 13.

The DCI receiving unit 15 receives the DCI that has been transmitted from the base station device 30 via the PDCCH and that designates the second resource that is not overlapped with the first resource.

When the DCI is received, the resource selecting unit 16 selects the second resource designated by the DCI. The second resource designated by the DCI is not overlapped with the first resource that has been used for the initial transmission of the data in at least one of the areas of the frequency domain and the time domain. In short, the second resource may be used as long as at least one of the areas of the frequency domain and the time domain is not overlapped with the first resource that has been used for the initial transmission of the data.

The repetitive transmitting unit 17 retransmits the data to the terminal device 20 by using the second resource designated by the DCI. Specifically, the repetitive transmitting unit 17 retransmits the data stored in the buffer unit 14 to the terminal device 20 by using the second resource designated by the DCI. Then, the repetitive transmitting unit 17 rewrites the location of the first resource indicated by the SCI stored in the buffer unit 14 into the location of the second resource and transmits the rewritten SCI to the terminal device 20 together with the data.

Furthermore, in a case in which the DCI that designates the second resource is not received before a predetermined period of time has elapsed after the initial transmission of the data performed by the data transmitting unit 13, the repetitive transmitting unit 17 autonomously selects a "third resource" for retransmission of the data from among the plurality of resources. Here, the plurality of resources are included in a resource pool in, for example, the mode 4 that has been introduced as one of the communication modes of V2X communication. Then, the repetitive transmitting unit 17 retransmits the data to the terminal device 20 by using the third resource. At this time, the repetitive transmitting unit 17 transmits the SCI including the information that indicates the location of a third resource to the terminal device 20 together with the data.

Furthermore, in a case in which the reception quality of the data in the terminal device 20 is not favorable, the DCI is transmitted from the base station device 30 to the terminal device 10 and, in a case in which the reception quality of the data in the terminal device 20 is favorable, the DCI is not transmitted. In other words, in a case in which the reception quality of the data in the terminal device 20 is favorable, the DCI that designates the second resource is not received by the DCI receiving unit 15 before a predetermined period of time has elapsed after the initial transmission of the data performed by the data transmitting unit 13. Thus, in a case in which the DCI that designates the second resource is not received before a predetermined period of time has elapsed after the initial transmission of the data performed by the data transmitting unit 13, the repetitive transmitting unit 17 may also stop retransmitting the data.

FIG. 3 is a diagram illustrating an example of a functional configuration of the base station device 30 according to the first embodiment. As illustrated in FIG. 3, the base station device 30 includes an SCI detecting unit 31, a reception quality judging unit 32, a resource selecting unit 33, and a DCI transmitting unit 34.

The SCI detecting unit 31 detects the SCI that is transmitted from the terminal device 10 to the terminal device 20 and that indicates the location of the first resource. Namely, in a case in which the SCI that is transmitted from the terminal device 10 to the terminal device 20 and that indicates the location of the first resource reaches the base station device 30, the SCI detecting unit 31 detects the subject SCI.

The reception quality judging unit 32 judges, by using the SCI indicating the location of the first resource, whether the reception quality of the data in the terminal device 20 is favorable. For example, in a case in which the first resource indicated by the SCI is used (selected) by the other terminal device that is present in the cell C, a probability of collision of pieces of data is increased in the first resource and it is thus difficult for the data sent from the terminal device 10 to reach the terminal device 20. In this case, the reception quality judging unit 32 detects the number of the other terminal devices that are selecting the first resource indicated by the SCI and judges, when the number of the other detected terminal devices exceeds a predetermined number, that the reception quality of the data in the terminal device 20 is not favorable. Furthermore, the reception quality judging unit 32 may also measure, in the first resource indicated by the SCI, an average value of reference signal received power (RSRP) or an average value of received signal strength indicators (RSSI) and judge the reception quality based on the measurement results. Furthermore, the reception quality judging unit 32 may also judge the reception quality based on the distance between the terminal device 10 and the terminal device 20 estimated from the location information on the terminal device 10 and the location information on the terminal device 20. Furthermore, the reception quality judging unit 32 may also judge the reception quality by detecting acknowledgement (ACK)/negative acknowledgement (NACK) sent, as a return, from the terminal device 20 in a broadcast manner.

When it is judged, by the reception quality judging unit 32, that the reception quality of the data in the terminal device 20 is not favorable, the resource selecting unit 33 selects the second resource that is used by the terminal device 10 to retransmit the data and that is not overlapped with the first resource. For example, when the terminal device 10 selects the first resource from the resource pool in the mode 4, the resource selecting unit 33 selects the second resource from among the plurality of resources that belong to the frequency domain or the time domain that are not overlapped with the resource pool in the mode 4.

The DCI transmitting unit 34 transmits the DCI that designates the second resource that has been selected via the PDCCH to the terminal device 10. For the transmission of the DCI, for example, a DCI format 5A having a plurality of fields that are previously prescribed in the communication standards of V2X communication is used.

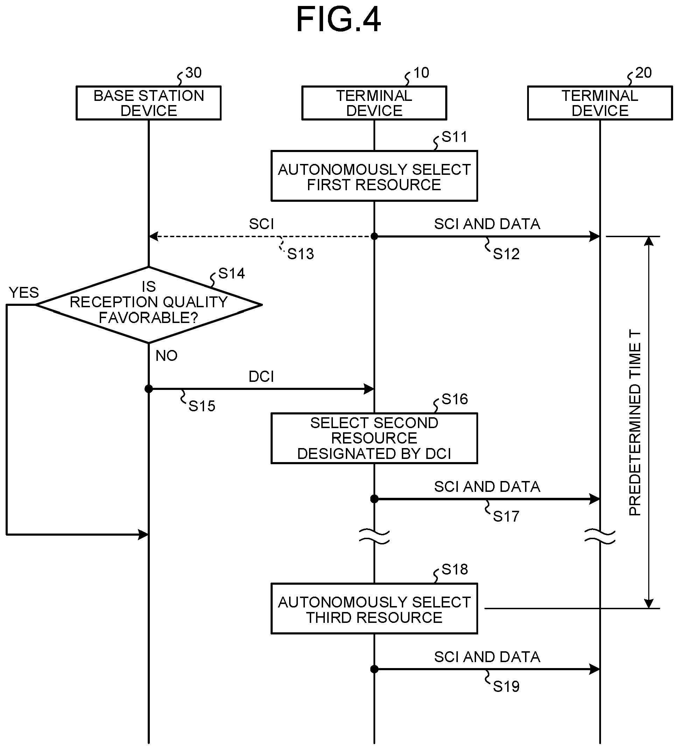

In the following, an operation of the wireless communication system 1 according to the embodiment will be described. FIG. 4 is a sequence diagram illustrating an example of the operation of the wireless communication system 1 according to the first embodiment.

When data that corresponds to the transmission target is generated, the terminal device 10 autonomously selects the first resource for transmission of the data from among the plurality of the resources (Step S11). The terminal device 10 transmits the data to the terminal device 20 by using the first resource and transmits the SCI that indicates the location of the first resource to the terminal device 20 together with the data (Step S12). At this time, the SCI indicating the location of the first resource reaches not only the terminal device 20 but also the base station device 30 that forms the cell C in which the terminal device 20 is present (Step S13).

The SCI indicating the location of the first resource is detected by the base station device 30. The base station device 30 judges, by using the SCI indicating the location of the first resource, whether the reception quality of the data in the terminal device 20 is favorable (Step S14). When it is judged that the reception quality of the data in the terminal device 20 is not favorable (No at Step S14), the base station device 30 selects the second resource that is used by the terminal device 10 to retransmit the data and that is not overlapped with the first resource. Then, the base station device 30 transmits the DCI that designates the second resource to the terminal device 10 via the PDCCH (Step S15).

The terminal device 10 receives the DCI that designates the second resource and that has been transmitted from the base station device 30. The terminal device 10 selects the second resource designated by the DCI (Step S16). The terminal device 10 retransmits the data to the terminal device 20 by using the second resource designated by the DCI and transmits the SCI that indicates the location of the second resource to the terminal device 20 together with the data (Step S17).

In contrast, when it is judged that the reception quality of the data in the terminal device 20 is favorable (Yes at Step S14), the base station device 30 stops selecting the second resource. Consequently, the DCI that designates the second resource is not transmitted from the base station device 30 to the terminal device 10. When the DCI that designates the second resource is not received before a predetermined period of time T has elapsed after the initial transmission of the data performed at Step S12, the terminal device 10 autonomously selects the third resource for retransmission of the data from among the plurality of resources (Step S18). Then, by using the third resource, the terminal device 10 retransmits the data and transmits the SCI indicating the location of the third resource to the terminal device 20 together with the data (Step S19).

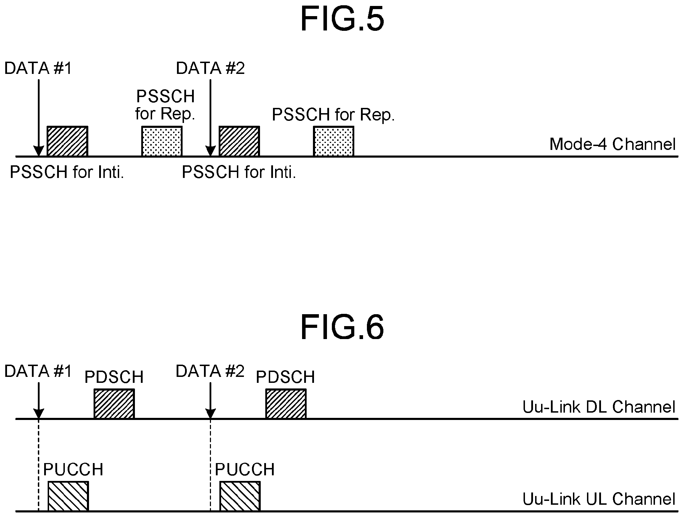

In the following, a specific example of the operation of the wireless communication system 1 according to the embodiment will be described. As an assumption thereof, a specific example of the operation of the wireless communication system according to comparative examples 1 to 3 will be described with reference to FIG. 5 to FIG. 7.

FIG. 5 is a diagram illustrating a specific example of an operation of the wireless communication system according to the comparative example 1. The comparative example 1 illustrated in FIG. 5 corresponds to repetition performed based on the mode 4 that has been introduced as one of the communication modes of V2X communication.

In the comparative example 1, when data #1 that is a transmission target is generated, the terminal device autonomously selects the first resource for transmission of the data #1 from among the plurality of resources and transmits the data #1 to the other terminal device by using the selected first resource. The initial transmission of the data #1 in the terminal device is performed via the PSSCH (see "PSSCH for Inti." in FIG. 5) in accordance with the first resource. Thereafter, the terminal device autonomously selects another resource, from among the plurality of resources, that is away from the first resource by a predetermined number of time units in the time direction (for example, subframes) and retransmits the data #1 to the other terminal device by using the other selected resource. The retransmission of the data #1 in the terminal device is performed via the PSSCH (see "PSSCH for Rep." in FIG. 5) in accordance with the other resource. Thereafter, when data #2 that is the transmission target is generated, initial transmission and retransmission of the data #2 is performed by using the same method as that used for the initial transmission and the retransmission of the data #1.

In the comparative example 1, because the resource for the transmission of the data and the resource for the retransmission of the data are autonomously selected by the terminal device, a probability of collision of pieces of PSSCH (data) is increased. As a result, high reliability, such as a packet reception rate of 99.999%, is not guaranteed.

FIG. 6 is a diagram illustrating a specific example of an operation of the wireless communication system according to the comparative example 2. The comparative example 2 illustrated in FIG. 6 corresponds to communication performed based on a Uu link.

In the comparative example 2, when the data #1 that is the transmission target is generated, the terminal device transmits UCI including the data #1 to the base station device. The transmission of the UCI including the data #1 is performed via the PUCCH that is the uplink control channel. The base station device that has received the UCI including the data #1 transmits the data #1 to the other terminal device. The transmission of the data #1 in the base station device is performed via a physical downlink shared channel (PDSCH). Thereafter, when the data #2 that is the transmission target is generated, transmission of the data #2 is performed by using the same method as that used for the transmission of the data #1.

In the comparative example 2, although high reliability is guaranteed, there are disadvantages in that a valuable channel (PUCCH and PDSCH) in the Uu link is sacrificed. Furthermore, because a considerable long delay occurs in order to transmit the PDSCH through the PUCCH, high reliability is guaranteed but a delay problem occurs.

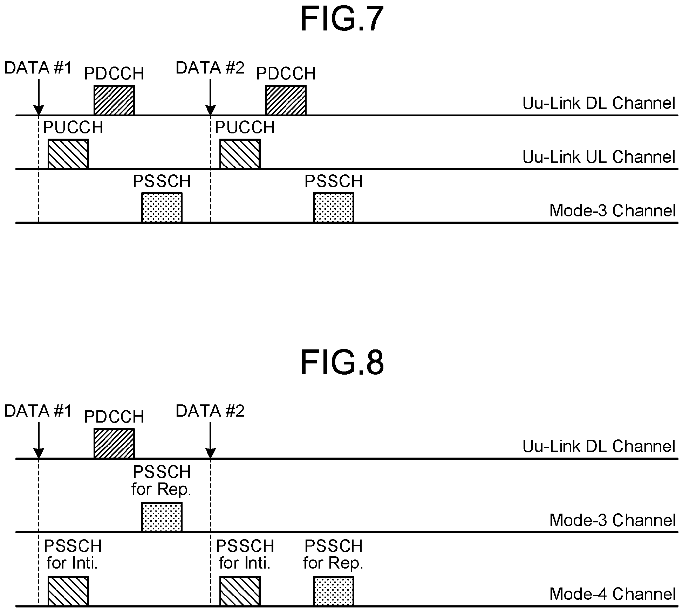

FIG. 7 is a diagram illustrating a specific example of an operation of the wireless communication system according to the comparative example 3. The comparative example 3 illustrated in FIG. 7 corresponds to communication performed based on a mode 3 as one of the communication modes of V2X communication.

In the comparative example 3, when the data #1 that is the transmission target is generated, the terminal device transmits the UCI indicating this state to the base station device. The transmission of the UCI in the terminal device is performed via the PUCCH that is an uplink control channel. The base station device that has received the UCI transmits the DCI that instructs to perform autonomous selection of the resource for transmission of the data #1 to the terminal device. The transmission of the DCI in the base station device is performed via the PDCCH that is a downlink control channel. The terminal device that has received the DCI autonomously selects the resource for transmission of the data #1 and transmits the data #1 to the other terminal device by using the selected resource. The transmission of the data #1 in the terminal device is performed via the PSSCH. Thereafter, when the data #2 that is the transmission target is generated, the transmission of the data #2 is performed by using the same method as that used for the transmission of the data #1.

In the comparative example 3, although high reliability is guaranteed, there are disadvantages in that a valuable channel (PUCCH and PDCCH) in the Uu link is sacrificed. Furthermore, because a considerable long delay occurs in order to transmit the PDSCH through the PUCCH, high reliability is guaranteed but a delay problem occurs.

FIG. 8 is a diagram illustrating a specific example of an operation of the wireless communication system 1 according to the first embodiment.

In the embodiment, when the data #1 that is the transmission target is generated, the terminal device 10 autonomously selects the first resource for the data #1 from among the plurality of the resources and transmits the data #1 to the terminal device 20 by using the selected first resource. The initial transmission of the data #1 in the terminal device 10 is performed via the PSSCH (see "PSSCH for Inti." in FIG. 8) in accordance with the first resource. Furthermore, the terminal device 10 transmits the SCI that indicates the location of the first resource to the terminal device 20 together with the data #1. At this time, the SCI indicating the location of the first resource reaches not only the terminal device 20 but also the base station device 30 that forms the cell C in which the terminal device 20 is present. The base station device 30 that has detected the SCI that indicates the location of the first resource judges, by using the subject SCI, whether the reception quality of the data in the terminal device 20 is favorable. Because the reception quality of the data in the terminal device 20 is not favorable, the base station device 30 selects the second resource that is not overlapped with the first resource and transmits the DCI that designates the second resource to the terminal device 10. The transmission of the DCI in the base station device 30 is performed via the PDCCH that is the downlink control channel. The terminal device 10 receives the DCI that has been transmitted from the base station device 30 and that designates the second resource, and then, selects the second resource designated by the DCI. The terminal device 10 retransmits the data #1 to the terminal device 20 by using the second resource designated by the DCI. The retransmission of the data #1 in the terminal device 10 is performed via the PSSCH (see "PSSCH for Rep." in FIG. 8) in accordance with the second resource.

Subsequently, when the data #2 that is the transmission target is generated, the terminal device 10 autonomously selects the first resource for transmission of the data #2 from among the plurality of resources and transmits the data #2 to the terminal device 20 by using the selected first resource. The initial transmission of the data #2 in the terminal device 10 is performed via the PSSCH (see "PSSCH for Inti." in FIG. 8) in accordance with the first resource. Furthermore, the terminal device 10 transmits the SCI that indicates the location of the first resource to the terminal device 20 together with the data #2. At this time, the SCI that indicates the location of the first resource reaches not only the terminal device 20 but also the base station device 30 that forms the cell C in which the terminal device 20 is present. The base station device 30 that has detected the SCI indicating the location of the first resource judges, by using the subject SCI, whether the reception quality of the data in the terminal device 20 is favorable. Because the reception quality of the data in the terminal device 20 is favorable, the base station device 30 does not perform selection of the second resource. Consequently, the DCI that designates the second resource is not transmitted from the base station device 30 to the terminal device 10. The terminal device 10 waits until a predetermined period of time has elapsed after the initial transmission of the data, autonomously selects the third resource for retransmission of the data #2 from among the plurality of resources, and transmits the data #2 to the terminal device 20 by using the selected third resource. The retransmission of the data #2 in the terminal device 10 is performed via the PSSCH (see "PSSCH for Rep." in FIG. 8) in accordance with the third resource. Furthermore, the terminal device 10 transmits the SCI that indicates the location of the third resource to the terminal device 20 together with the data #3.

As described above, according to the embodiment, after the terminal device 10 autonomously selects the first resource and transmits the data, the terminal device 10 retransmits the data by using the second resource designated by the DCI transmitted from the base station device 30. Consequently, because communication between the terminal device 10 and the base station device 30 is omitted at the time of the initial transmission of the data performed by the terminal device 10, a delay in the sidelink is suppressed. Furthermore, because the resource designated by the base station device 30 using the DCI is used at the time of the retransmission of the data performed by the terminal device 10, the resource used between the terminal device 10 and another terminal device in the cell C does not collide; therefore, a probability of collision of pieces of data is reduced. As a result, it is possible to implement V2X communication that satisfies the request for low delay and high reliability.

Furthermore, according to the embodiment, in a case in which DCI that designates the second resource is not received before a predetermined period of time has elapsed after the initial transmission of the data, the terminal device 10 autonomously selects the third resource for retransmission of the data from among the plurality of resources. Then, the terminal device 10 retransmits the data to the terminal device 20 by using the third resource. Consequently, because communication between the terminal device 10 and the base station device 30 is omitted at the initial transmission and the retransmission of the data performed by the terminal device 10, a delay in the sidelink is suppressed. As a result, it is possible to implement lower delay V2X communication while satisfying a request for high reliability.

### Second Embodiment

The characteristic of a second embodiment is that the base station device transmits the DCI that designates autonomous selection of the third resource for the retransmission of the data, and the terminal device that has received the DCI spontaneously selects the third resource and retransmits the data by using the third resource.

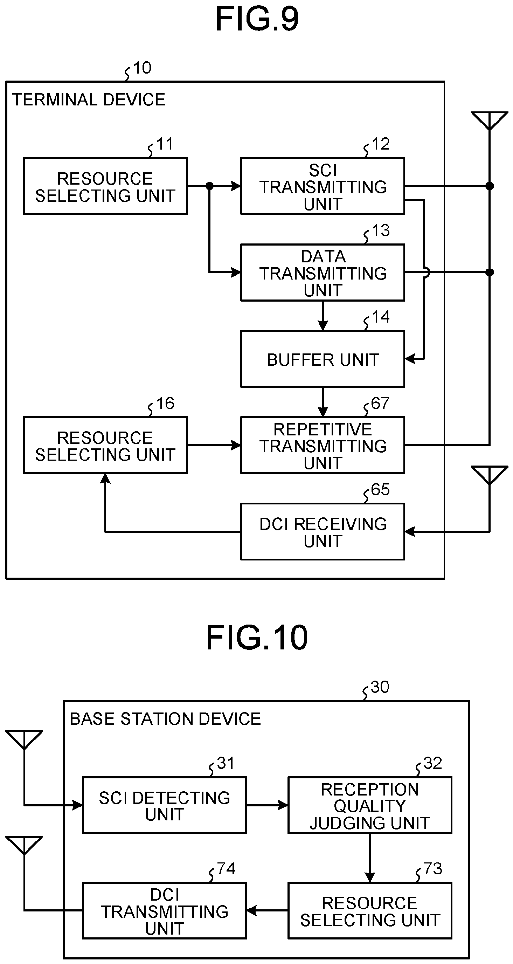

The wireless communication system 1 according to the second embodiment is the same as the wireless communication system 1 according to the first embodiment (see FIG. 1); therefore, descriptions thereof will be omitted. FIG. 9 is a diagram illustrating an example of a functional configuration of the terminal device 10 according to the second embodiment. In FIG. 9, components that are the same as those illustrated in FIG. 2 are assigned the same reference numerals and descriptions thereof will be omitted. As illustrated in FIG. 9, instead of the DCI receiving unit 15 and the repetitive transmitting unit 17 illustrated in FIG. 2, the terminal device 10 includes a DCI receiving unit 65 and a repetitive transmitting unit 67.

The DCI receiving unit 65 receives the DCI that has been transmitted from the base station device 30 via the PDCCH and that designates the second resource or that designates autonomous selection of the third resource for the retransmission of the data.

Similarly to the repetitive transmitting unit 17 illustrated in FIG. 2, the repetitive transmitting unit 67 retransmits the data to the terminal device 20 by using the second resource designated by the DCI.

Furthermore, when the DCI that designates autonomous selection of the third resource is received, the repetitive transmitting unit 67 autonomously selects the "third resource" for retransmission of the data from among the plurality of the resource. Here, the plurality of resources are included in the resource pool in, for example, the mode 4 that has been introduced as one of the communication modes of V2X communication. Then, the repetitive transmitting unit 67 retransmits the data to the terminal device 20 by using the third resource. At this time, the repetitive transmitting unit 67 transmits the SCI including the information that indicates the location of the third resource to the terminal device 20 together with the data.

FIG. 10 is a diagram illustrating an example of a functional configuration of the base station device 30 according to the second embodiment. In FIG. 10, components that are the same as those illustrated in FIG. 3 are assigned the same reference numerals and descriptions thereof will be omitted. As illustrated in FIG. 10, the base station device 30 includes, instead of the resource selecting unit 33 and the DCI transmitting unit 34, a resource selecting unit 73 and a DCI transmitting unit 74.

When it is judged, by the reception quality judging unit 32, that the reception quality of the data in the terminal device 20 is not favorable, the resource selecting unit 73 selects the second resource that is used by the terminal device 10 for the retransmission of the data and that is not overlapped with the first resource. Furthermore, when it is judged, by the reception quality judging unit 32, that the reception quality of the data in the terminal device 20 is favorable, the resource selecting unit 73 stops selecting the second resource.

When the selection of the second resource is stopped, the DCI transmitting unit 74 transmits the DCI that designates autonomous selection of the third resource for the retransmission of the data to the terminal device 10. For the retransmission of the DCI, for example, the DCI format 5A having a plurality of fields that are previously prescribed in the communication standards of V2X communication is used. When the DCI format 5A is used for the transmission of the DCI, for example, information, such as a flag or the like, that designates autonomous selection of the third resource for the retransmission of the data is added to the DCI format 5A.

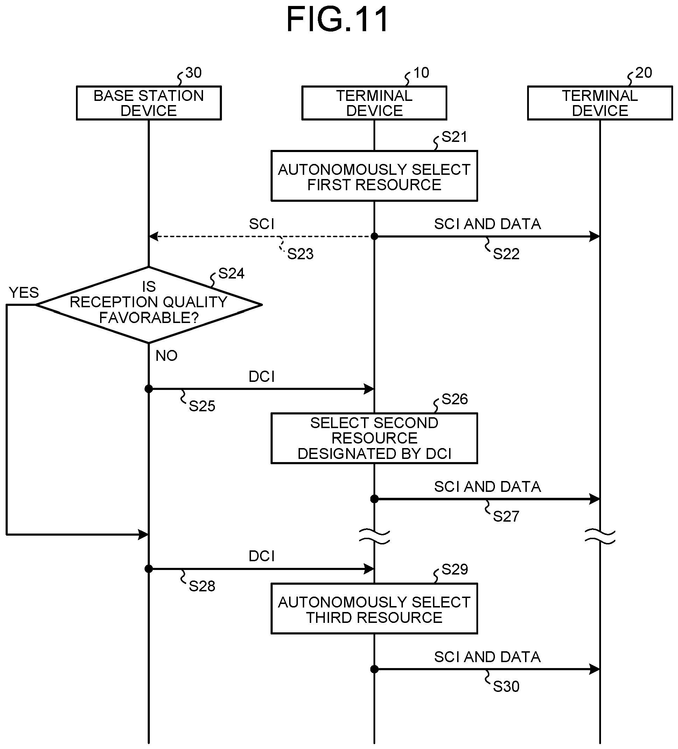

In the following, an operation of the wireless communication system 1 according to the embodiment will be described. FIG. 11 is a sequence diagram illustrating the operation of the wireless communication system 1 according to the second embodiment. In FIG. 11, Steps S21 to S27 corresponds to Steps S11 to S17 illustrated in FIG. 4; therefore, descriptions thereof will be omitted.

When it is judged that the reception quality of the data in the terminal device 20 is favorable (Yes at Step S24), the base station device 30 performs the following processes. Namely, the base station device 30 stops selecting the second resource and transmits the DCI that designates autonomous selection of the third resource for the retransmission of the data to the terminal device 10 via the PDCCH (Step S28).

The terminal device 10 receives the DCI that has been transmitted from the base station device 30 and that designates autonomous selection of the third resource for the retransmission of the data. The terminal device 10 autonomously selects the third resource for the retransmission of the data from among the plurality of resources (Step S29). Then, the terminal device 10 retransmits the data by using the third resource and transmits the SCI that indicates the location of the third resource to the terminal device 20 together with the data (Step S30).

As described above, according to the embodiment, the base station device 30 transmits the DCI that designates autonomous selection of the third resource for the retransmission of the data, and the terminal device 10 that has received the DCI spontaneously selects the third resource and retransmits the data by using the third resource. Consequently, because the terminal device 10 can perform retransmission of the data without waiting for receiving the DCI, it is possible to implement lower delay V2X communication.

### Third Embodiment

In the first and the second embodiments described above, a description has been given of a case in which the base station device 30 selects the second resource and transmits the DCI that designates the second resource to the terminal device 10. In a third embodiment, a case in which the terminal device capable of performing communication with the terminal device 10 selects the second resource and transmits the SCI that designates the second resource to the terminal device 10 will be described.

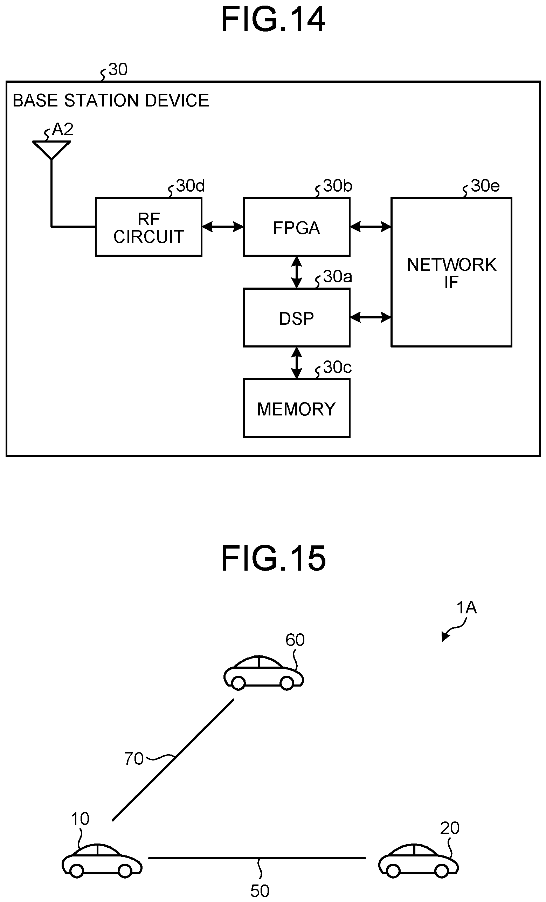

FIG. 15 is a diagram illustrating a configuration of a wireless communication system 1A according to the third embodiment. The wireless communication system 1A illustrated in FIG. 15 includes the terminal device 10, the terminal device 20, and a management terminal device 60. The terminal device 10 and the terminal device 20 belong to a terminal device group managed by the management terminal device 60. The terminal device 10 and the terminal device 20 are, for example, automobiles. The management terminal device 60 may also be any terminal device as long as the terminal device can perform communication with the terminal device 10 and is, for example, an automobile, a road side unit (RSU), a cluster header (CH), or the like. The terminal device 10 and the management terminal device 60 are connected by a radio link 70, and the terminal device 10 and the terminal device 20 are connected by the radio link 50. The radio links 50 and 70 are called sidelinks or PC5 links. Furthermore, FIG. 15 illustrates an example in which both of the terminal device 10 and the terminal device 20 belong to the terminal device group managed by the management terminal device 60; however, it is assumed that other terminal devices (not illustrated) also belong to the terminal device group managed by the management terminal device 60.

The terminal device 10 transmits, in the radio link 50, both of the SCI and the data to the terminal device 20. The SCI is transmitted via, for example, the PSCCH that is the control channel of the sidelink. Furthermore, as the control channel of the sidelink, in a case in which another control channel that is different from the PSCCH is present, the SCI is transmitted via the other control channel. Furthermore, instead of the SCI, it may also be possible to use the other control information, such as sidelink feedback control information (SFCI), or the like. The data is transmitted via, for example, the PSSCH that is the data channel of the sidelink. Furthermore, the terminal device 10 repeatedly transmits the same data. Namely, when the data that is the transmission target is generated, the terminal device 10 autonomously selects the "first resource" for the transmission of the data from among the plurality of resources and transmits the data by using the first resource. Then, the terminal device 10 receives the SCI that has been transmitted from the management terminal device 60 and that designates the "second resource" that is not overlapped with the first resource. Then, the terminal device 10 retransmits the data to the terminal device 20 by using the second resource designated by the SCI.

The management terminal device 60 judges whether the reception quality of the data in the terminal device 20 is favorable by identifying the PSCCH for the first resource. Judging whether the reception quality is favorable is performed by, for example, relative information on the locations between the terminal device 10 and the terminal device 20 or the ACK/NACK information fed back from the terminal device 20. Then, when it is judged that the reception quality of the data is favorable, the management terminal device 60 selects the resource that is used by the terminal device 10 to retransmit the data and that is not overlapped with the first resource. Then, the management terminal device 60 transmits the SCI that designates the second resource to the terminal device 10. The SCI is transmitted, for example, via the PSCCH that is the control channel of the sidelink. Furthermore, in a case in which the other control channel that is different from the PSCCH is present as the control channel of the sidelink, the SCI is transmitted via the other control channel. Furthermore, instead of the SCI, the other control information, such as SFCI, may also be used. The management terminal device 60 is an example of the wireless communication device.

As described above, in the wireless communication system 1A, after the terminal device 10 autonomously selects the first resource and transmits the data, the terminal device 10 retransmits the data by using the second resource designated by the SCI transmitted from the management terminal device 60. Consequently, because communication between the terminal device 10 and the management terminal device 60 is omitted at the time of the initial transmission of the data performed by the terminal device 10, a delay in the sidelink is suppressed. Furthermore, because the resource that has been designated by the management terminal device 60 by using the SCI is used at the time of retransmission of the data performed by the terminal device 10, no collision occurs in the resources used between the terminal device 10 and the other terminal device managed by the management terminal device 60, and thus, a probability of collision of pieces of data is reduced. As a result, even in a case in which the terminal device 10, the terminal device 20, and the management terminal device 60 are not present in the cell of the base station device, it is possible to implement V2X communication that satisfies the request for low delay and high reliability.

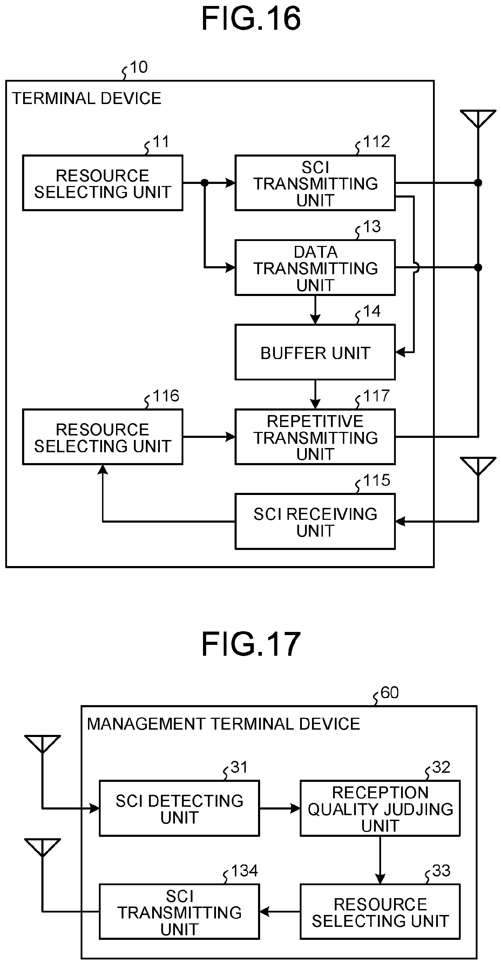

FIG. 16 is a diagram illustrating a functional configuration of the terminal device 10 according to the third embodiment. In FIG. 16, components that are the same as those illustrated in FIG. 2 are assigned the same reference numerals and descriptions thereof will be omitted. As illustrated in FIG. 16, instead of the SCI transmitting unit 12, the DCI receiving unit 15, the resource selecting unit 16, and the repetitive transmitting unit 17 illustrated in FIG. 2, the terminal device 10 includes an SCI transmitting unit 112, an SCI receiving unit 115, a resource selecting unit 116, and a repetitive transmitting unit 117.

The SCI transmitting unit 112 transmits the SCI that indicates the location of the first resource to the terminal device 20. For the transmission of the SCI, for example, the SCI format 1 having a plurality of fields that are previously prescribed in the communication standards of V2X communication is used. The SCI that indicates the location of the first resource reaches not only the terminal device 20 but also the management terminal device 60 that can communicate with the terminal device 20. Furthermore, the SCI transmitting unit 112 may also transmit the SCI that indicates the location of the first resource to the management terminal device 60 via the PSCCH that is the control channel of the sidelink. The SCI transmitting unit 112 is an example of the second transmitting unit.

The SCI receiving unit 115 receives the SCI that has been transmitted from the management terminal device 60 via the PSCCH and that designates the second resource that is not overlapped with the first resource.

When the SCI is received, the resource selecting unit 116 selects the second resource designated by the SCI. The second resource designated by the SCI is not overlapped with the first resource that has been used for the initial transmission of the data in at least one of the areas of the frequency domain and the time domain. In short, the second resource may also be used as long as the second resource is not overlapped with the first resource that has been used for the initial transmission of the data in at least either of the areas of the frequency domain or the time domain.

The repetitive transmitting unit 117 retransmits the data to the terminal device 20 by using the second resource designated by the SCI. Specifically, the repetitive transmitting unit 117 retransmits the data stored in the buffer unit 14 to the terminal device 20 by using the second resource designated by the SCI. Then, the repetitive transmitting unit 117 rewrites the location of the first resource indicated by the SCI stored in the buffer unit 14 into the location of the second resource and transmits the rewritten SCI to the terminal device 20 together with the data.

Furthermore, in a case in which the SCI that designates the second resource is not received before the a predetermined period of time has elapsed after the initial transmission of the data performed by the data transmitting unit 13, the repetitive transmitting unit 117 autonomously selects the "third resource" for the retransmission of the data from among the plurality of resources. Here, the plurality of resources are included in a resource pool in, for example, the mode 4 that has been introduced as one of the communication modes of V2X communication. Then, the repetitive transmitting unit 117 retransmits the data to the terminal device 20 by using the third resource. At this time, the repetitive transmitting unit 117 transmits the SCI including the information that indicates the location of the third resource to the terminal device 20 together with the data.

Furthermore, the SCI is transmitted from the management terminal device 60 to the terminal device 10 in a case in which the reception quality of the data in the terminal device 20 is not favorable, and the SCI is not transmitted in a case in which the reception quality of the data in the terminal device 20 is favorable. In other words, in a case in which the reception quality of the data in the terminal device 20 is favorable, the SCI that designates the second resource is not received by the SCI receiving unit 115 before a predetermined period of time has elapsed after the initial transmission of the data performed by the data transmitting unit 13. Thus, in a case in which the SCI that designates the second resource is not received before a predetermined period of time has elapsed from the initial transmission of the data performed by the data transmitting unit 13, the repetitive transmitting unit 117 may also stop retransmission of the data.

FIG. 17 is a diagram illustrating an example of a functional configuration of the management terminal device 60 according to the third embodiment. As illustrated in FIG. 17, the management terminal device 60 includes an SCI detecting unit 61, the reception quality judging unit 32, the resource selecting unit 33, and an SCI transmitting unit 134. The SCI detecting unit 61, the reception quality judging unit 32, and the resource selecting unit 33 have the same functions as those of the SCI detecting unit 61, the reception quality judging unit 32, and the resource selecting unit 33 (see FIG. 3) included in the base station device 30.

Furthermore, the management terminal device 60 may also include at least the SCI detecting unit 61. Namely, the management terminal device 60 can also have the SCI detecting unit 61 and the data detecting unit. Furthermore, similarly to the reception quality judging unit 32 illustrated in FIG. 3, the reception quality judging unit 32 estimates the reception quality of the data in the terminal device 20 based on the location information on the terminal device 10 and the terminal device 20 and based on ACK/NACK fed back from the terminal device 20.

The SCI transmitting unit 134 transmits the SCI that designates the second resource selected by the resource selecting unit 33 to the terminal device 10 via the PSCCH. For the transmission of the SCI, for example, the SCI format 1 having a plurality of fields that are previously prescribed in the communication standards of V2X communication is used.

Furthermore, the management terminal device 60 not only controls the transmission resources of the terminal device 10, but also operates as a general terminal device and performs transmission and reception of data and the like. Namely, in addition to each of the functioning units illustrated in FIG. 17, the management terminal device 60 includes each of the functioning units included in the terminal device 10 (see FIG. 16).

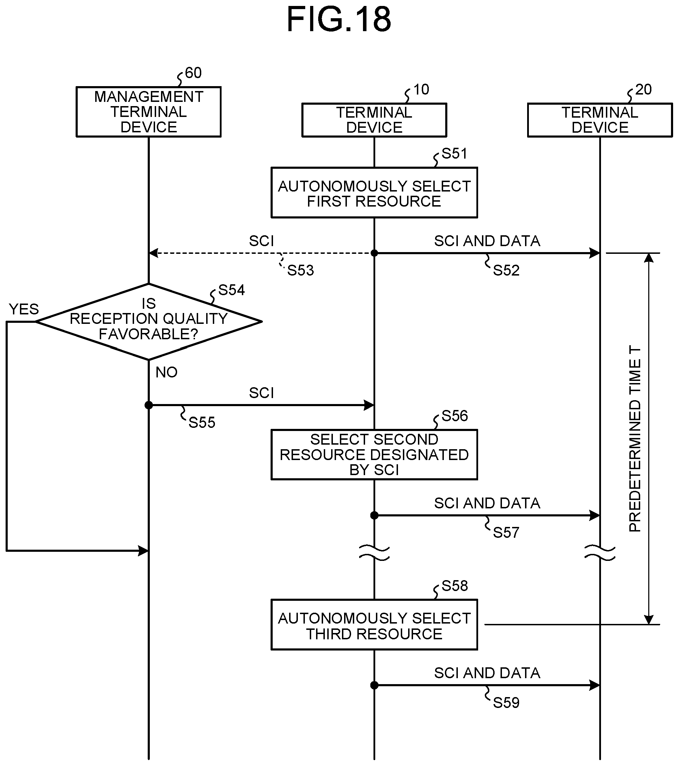

In the following, an operation of the wireless communication system 1A according to the embodiment will be described. FIG. 18 is a sequence diagram illustrating an example of the operation of the wireless communication system 1A according to the third embodiment.

When the data that is the transmission target is generated, the terminal device 10 autonomously selects the first resource for the transmission of the data from among the plurality of resources (Step S51). The terminal device 10 transmits the data to the terminal device 20 by using the first resource and transmits the SCI that indicates the location of the first resource to the terminal device 20 together with the data (Step S52). At this time, the SCI that indicates the location of the first resource reaches not only the terminal device 20 but also the management terminal device 60 that can perform communication with the terminal device 20 (Step S53).

At least the SCI indicating the location of the first resource or the SCI and the data are detected by the management terminal device 60. The management terminal device 60 judges whether the reception quality of the data in the terminal device 20 is favorable by using the SCI that indicates the location of the first resource (Step S54). When it is judged that the reception quality of the data in the terminal device 20 is not favorable (No at Step S54), the management terminal device 60 selects the second resource that is used by the terminal device 10 to retransmit the data and that is not overlapped with the first resource. Then, the management terminal device 60 transmits the SCI that designates the selected second resource to the terminal device 10 via the PSCCH (Step S55).

The terminal device 10 receives the SCI that designates the second resource transmitted from the management terminal device 60. The terminal device 10 selects the second resource that has been designated by the SCI (Step S56). The terminal device 10 retransmits the data to the terminal device 20 by using the second resource designated by the SCI and transmits the SCI indicating the location of the second resource to the terminal device 20 together with the data (Step S57).

In contrast, when it is judged that the reception quality of the data in the terminal device 20 is favorable (Yes at Step S54), the management terminal device 60 stops selecting the second resource. Consequently, the SCI that designates the second resource is not transmitted from the management terminal device 60 to the terminal device 10. Furthermore, it is judged that the reception quality of the data in the terminal device 20 is favorable, the information (fewer bits) indicating a stop of the retransmission of the data may also be sent, as a notification, to the terminal device 10 by the control channel. When the SCI that designates the second resource is not received before the predetermined period of time T has elapsed after the initial transmission of the data performed at Step S52, the terminal device 10 autonomously selects the third resource for the retransmission of the data from among the plurality of resources (Step S58). Then, the terminal device 10 retransmits the data by using the third resource and transmits the SCI indicating the location of the third resource to the terminal device 20 together with the data (Step S59). Furthermore, when the information for stopping the retransmission of the data is sent, as a notification, to the terminal device 10, the terminal device 10 stops retransmission of the data.

As described above, according to the embodiment, after the terminal device 10 autonomously selects the first resource and transmits the data, the terminal device 10 retransmits the data by using the second resource designated by the SCI transmitted from the management terminal device 60. Consequently, because communication between the terminal device 10 and the management terminal device 60 is omitted at the time of the initial transmission of the data performed by the terminal device 10, a delay in the sidelink is suppressed. Furthermore, because the resource that has been designated by the management terminal device 60 by using the SCI is used at the time of retransmission of the data performed by the terminal device 10, no collision occurs in the resources used between the terminal device 10 and the other terminal device managed by the management terminal device 60, and thus, a probability of collision of pieces of data is reduced. As a result, it is possible to implement V2X communication that satisfies the request for low delay and high reliability.

Furthermore, according to the embodiment, in a case in which the SCI that designates the second resource is not received before a predetermined period of time has elapsed after the initial transmission of the data, the terminal device 10 autonomously selects the third resource for the retransmission of the data from among the plurality of resources. Then, the terminal device 10 retransmits the data to the terminal device 20 by using the third resource. Consequently, because communication between the terminal device 10 and the management terminal device 60 is omitted at the time of the initial transmission and the retransmission of the data performed by the terminal device 10, a delay in the sidelink is suppressed. As a result, it is possible to implement lower delay V2X communication while satisfying a request for high reliability.

### Fourth Embodiment

The characteristic of a fourth embodiment is that the management terminal device 60 transmits the SCI that designates autonomous selection of the third resource for retransmission of the data, and the terminal device 10 that has received the SCI autonomously selects the third resource and retransmits the data by using the third resource.

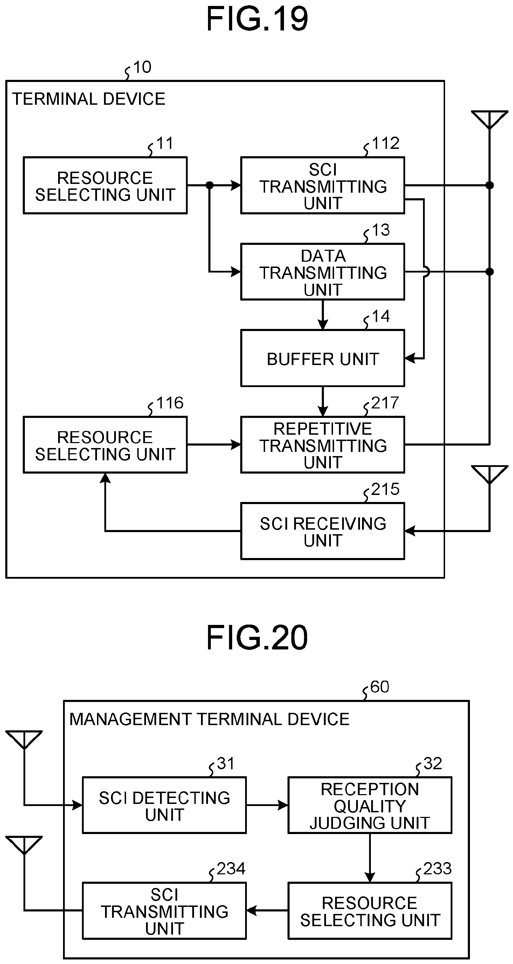

The wireless communication system 1A according to the fourth embodiment is the same as the wireless communication system 1A according to the third embodiment (see FIG. 15); therefore, descriptions thereof will be omitted. FIG. 19 is a diagram illustrating an example of a functional configuration of the terminal device 10 according to the fourth embodiment. In FIG. 19, components that are the same as those illustrated in FIG. 16 are assigned the same reference numerals and descriptions thereof will be omitted. As illustrated in FIG. 19, instead of the SCI receiving unit 115 and the repetitive transmitting unit 117 illustrated in FIG. 16, the terminal device 10 includes, an SCI receiving unit 215 and a repetitive transmitting unit 217.

The SCI receiving unit 215 receives SCI that has been transmitted from the management terminal device 60 via a PSCCH and that designates the second resource or that designates autonomous selection of the third resource for retransmission of the data.

Similarly to the repetitive transmitting unit 117 illustrated in FIG. 16, the repetitive transmitting unit 217 retransmits the data to the terminal device 20 by using the second resource designated by the SCI.

Furthermore, when the SCI that designates autonomous selection of the third resource is received, the repetitive transmitting unit 217 autonomously selects the "third resource" for the retransmission of the data from among the plurality of resources. Here, the plurality of resources are included in a resource pool in, for example, the mode 4 that has been introduced as one of the communication modes of V2X communication. Then, the repetitive transmitting unit 217 retransmits the data to the terminal device 20 by using the third resource. At this time, the repetitive transmitting unit 217 transmits the SCI including the information that indicates the location of the third resource to the terminal device 20 together with the data.

FIG. 20 is a diagram illustrating an example of a functional configuration of the management terminal device 60 according to the fourth embodiment. In FIG. 20, components that are the same as those illustrated in FIG. 17 are assigned the same reference numerals and descriptions thereof will be omitted. As illustrated in FIG. 20, instead of the resource selecting unit 33 and the SCI transmitting unit 134 illustrated in FIG. 17, the management terminal device 60 includes a resource selecting unit 233 and an SCI transmitting unit 234.

When it is judged, by the reception quality judging unit 32, that the reception quality of the data in the terminal device 20 is not favorable, the resource selecting unit 233 selects the second resource that is used by the terminal device 10 to retransmit the data and that is not overlapped with the first resource. Furthermore, when it is judged, by the reception quality judging unit 32, that the reception quality of the data in the terminal device 20 is favorable, the resource selecting unit 233 stops selecting the second resource. Furthermore, similarly to the reception quality judging unit 32 illustrated in FIG. 3, the reception quality judging unit 32 estimates the reception quality of the data in the terminal device 20 based on the location information of the terminal device 10 and the terminal device 20 and based on ACK/NACK fed back from the terminal device 20.

When the selection of the second resource is stopped, the SCI transmitting unit 234 transmits the SCI that designates autonomous selection of the third resource for retransmission of the data to the terminal device 10. For the transmission of the SCI, for example, the SCI format 1 having a plurality of fields previously prescribed in the communication standards of V2X communication is used. When the SCI format 1 is used for the transmission of the SCI, for example, information, such as a flag or the like, that designates autonomous selection of the third resource for the retransmission of the data is added to the SCI format 1.

Furthermore, the management terminal device 60 not only controls the transmission resources of the terminal device 10, but also operates as a general terminal device and transmits and receives data and the like. Namely, in addition to each of the functioning units illustrated in FIG. 17, the management terminal device 60 includes each of the functioning units (see FIG. 16) of the terminal device 10.

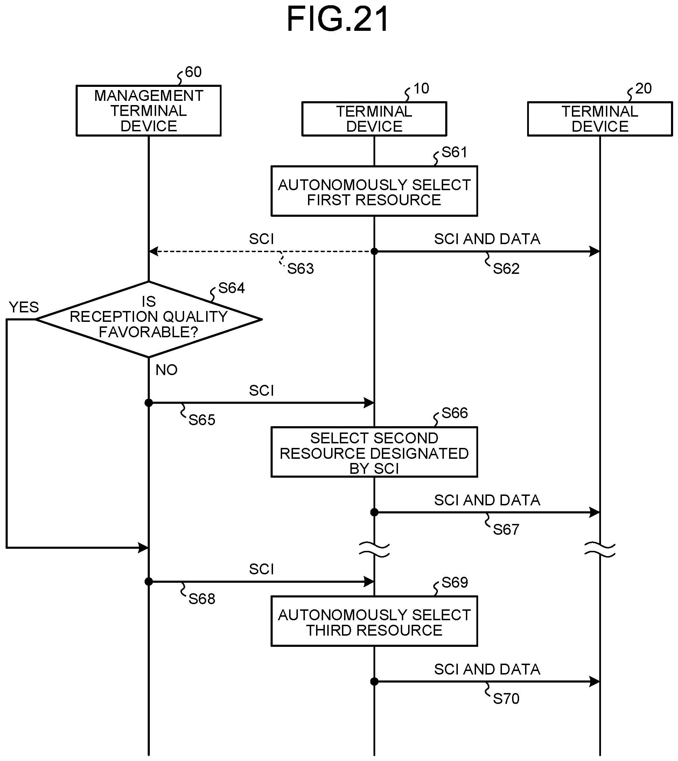

In the following, an operation of the wireless communication system 1A according to the embodiment will be described. FIG. 21 is a sequence diagram illustrating an example of the operation of the wireless communication system 1A according to the fourth embodiment. In FIG. 21, Steps S61 to S67 correspond to Steps S51 to S57; therefore, descriptions thereof will be omitted.

When it is judged that the reception quality of the data in the terminal device 20 is favorable (Yes at Step S64), the management terminal device 60 performs the following process. Namely, the management terminal device 60 stops selecting the second resource and transmits the SCI that designates autonomous selection of the third resource for the retransmission of the data to the terminal device 10 via the PSCCH (Step S68).

The terminal device 10 receives the SCI that has been transmitted from the management terminal device 60 and that designates autonomous selection of the third resource for the retransmission of the data. The terminal device 10 autonomously selects the third resource for the retransmission of the data from among the plurality of resources (Step S69). Then, the terminal device 10 retransmits the data by using the third resource and transmits the SCI that indicates the location of the third resource to the terminal device 20 together with the data (Step S70).

As described above, according to the embodiment, the management terminal device 60 transmits the SCI that designates autonomous selection of the third resource for the retransmission of the data, and the terminal device 10 that has received the SCI spontaneously selects the third resource and retransmits the data by using the third resource. Consequently, because the terminal device 10 can retransmit the data without waiting for reception of the SCI, it is possible to implement lower delay V2X communication.

### Fifth Embodiment

The characteristic of a fifth embodiment is that the management terminal device 60 dynamically changes the ratio of the size of the resource pool to which the first resource for the data belongs and the size of the resource pool to which the second resource for retransmission of data belongs.

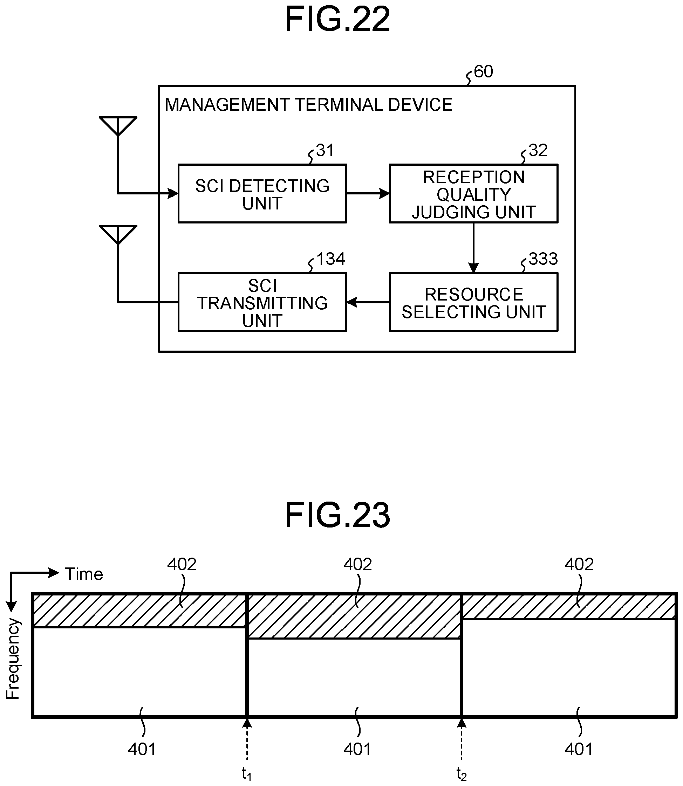

The wireless communication system 1A according to the fifth embodiment is the same as the wireless communication system 1A (see FIG. 15) according to the third embodiment; therefore, descriptions thereof will be omitted. Furthermore, the terminal device 10 according to the fifth embodiment is the same as the terminal device 10 (see FIG. 16) according to the third embodiment; therefore, descriptions thereof will be omitted. FIG. 22 is a diagram illustrating a functional configuration of the management terminal device 60 according to the fifth embodiment. In

FIG. 22, components that are the same as those illustrated in FIG. 17 are assigned the same reference numerals and descriptions thereof will be omitted. As illustrated in FIG. 22, instead of the resource selecting unit 33 illustrated in FIG. 17, the management terminal device 60 includes a resource selecting unit 333.

When it is judges, by the reception quality judging unit 32, that the reception quality of the data in the terminal device 20 is not favorable, the resource selecting unit 333 selects the second resource that is used by the terminal device 10 for the retransmission of the data and that is not overlapped with the first resource. In the embodiment, the first resource pool to which the first resource for the transmission of the data belongs and the second resource pool to which the second resource for the retransmission of the data belongs are obtained by being split from a common resource pool that has a constant size. Namely, regarding the size Sᵢₙᵢₜ of the first resource pool, the size Sᵣₑₚₑₜ of the second resource pool, and the size Sₜₒₜₐₗ of the common resource pool, a relationship of Sᵢₙᵢₜ+Sᵣₑₚₑt=Sₜₒₜₐₗ (constant) is established. Furthermore, because a packet reception ratio (PRR) with respect to the initial transmission of the data reaches about 90%, a relationship of Sᵢₙᵢₜ>Sᵣₑₚₑₜ is established in order to improve the entire PRR.

Incidentally, in V2X communication, from the viewpoint of high reliability, it is assumed that the PRR with respect to initial transmission and retransmission of data is targeted in the range of, for example, 99% to 99.999%. As the PRR, for example, an average value of a plurality of PRRs related to a plurality of terminal devices measured within a predetermined period of time or the minimum value of the PRR related to the plurality of terminal devices are used. In order to allow the PRR to be the maximum, it is preferable to optimize the size of the first resource pool that is used for the initial transmission of the data and the size of the second resource pool that is used for the retransmission of the data in accordance with the requested PRR.

Thus, the resource selecting unit 333 changes, at predetermined timing, the ratio of the size Sᵢₙᵢₜ of the first resource pool to the size Sᵣₑₚₑₜ of the second resource pool. For example, the resource selecting unit 333 changes, at the timing in which the requested PRR is changed, the ratio of the size Sᵢₙᵢₜ of the first resource pool to the size Sᵣₑₚₑₜ of the second resource pool. Furthermore, the resource selecting unit 333 may also change the ratio at the timing in which an amount of traffic is changed. Furthermore, the resource selecting unit 333 may also use the radio resource control (RRC) or an L1 control channel and notify the terminal device managed by the management terminal device 60 of the changed ratio.

FIG. 23 is a diagram illustrating a specific example 1 of a change in the ratio of the size Sᵢₙᵢₜ of a first resource pool 401 to the size Sᵣₑₚₑₜ of a second resource pool 402. In the example illustrated in FIG. 23, the frequency bandwidth of the first resource pool 401 and the frequency bandwidth of the second resource pool 402 are changed at timings t₁ and t₂ in each of which the requested PRR is changed, respectively. Consequently, the ratio of the size Sᵢₙᵢₜ of the first resource pool 401 to the size Sᵣₑₚₑₜ of the second resource pool 402 is changed.

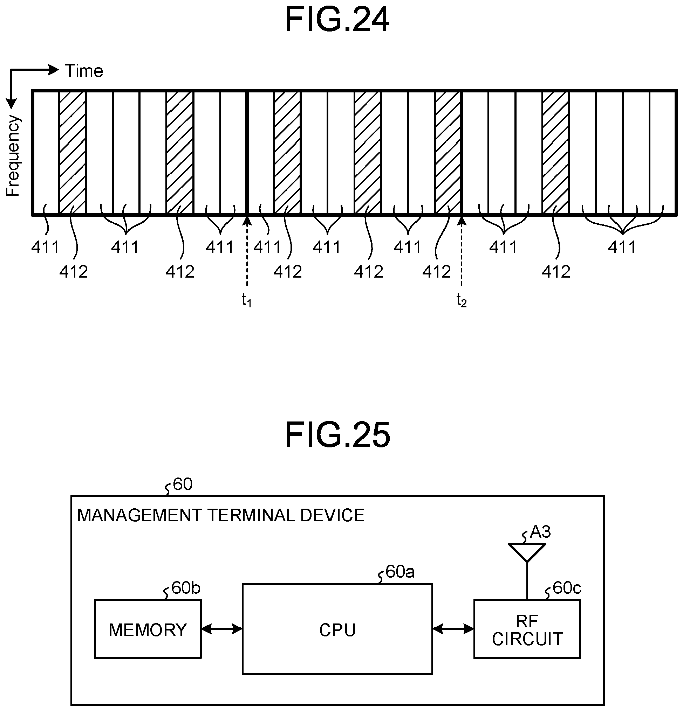

FIG. 24 is a diagram illustrating a specific example 2 of a change in the ratio of the size Sᵢₙᵢₜ of a first resource pool 411 to the size Sᵣₑₚₑₜ of a second resource pool 412. In the example illustrated in FIG. 24, the number of time slots constructing the first resource pool 411 and the number of slots constructing the second resource pool 412 are changed at the timings t₁ and t₂ in each of which the requested PRR is changed, respectively. Consequently, the ratio of the size Sᵢₙᵢₜ of the first resource pool 411 to the size Sᵣₑₚₑₜ of the second resource pool 412 is changed.

As described above, according to the embodiment, the management terminal device 60 dynamically changes the ratio of the size of the first resource pool to which the first resource for transmission of the data belongs and the size of the second resource pool to which the second resource for retransmission of the data belongs. Consequently, it is possible to maximize the PRR with respect to the initial transmission and the retransmission of the data, which makes it possible to implement higher reliable V2X communication.

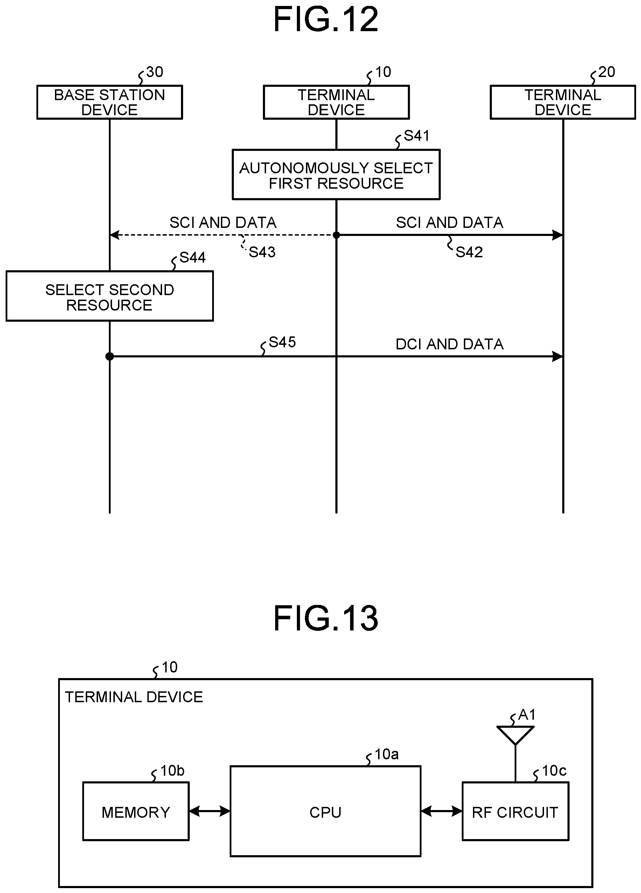

As described above, various embodiments have been described. However, the disclosed technologies are not limited to the embodiments described above and various modifications are possible. For example, in the first and the second embodiments described above, in a case in which the reception quality of the data in the terminal device 20 is not favorable, the DCI that designates the second resource that is used for the retransmission of the data is transmitted from the base station device 30 to the terminal device 10; however, the disclosed technology is not limited to this. For example, in a case in which the reception quality of the data in the terminal device 20 is not favorable, the base station device 30 may also transmit, by itself, the data to the terminal device 20. FIG. 12 is a sequence diagram illustrating an example of an operation of the wireless communication system 1 in a case in which the base station device 30 transmits, by itself, the data to the terminal device 20.

When the data targeted for transmission is generated, the terminal device 10 autonomously selects the first resource for transmission of the data from among the plurality of resources (Step S41). The terminal device 10 transmits, by using the first resource, the data to the terminal device 20 and transmits the SCI indicating the location of the first resource to the terminal device 20 together with the data (Step S42). At this time, both of the SCI indicating the location of the first resource and the data reaches not only the terminal device 20 but also the base station device 30 that forms the cell C in which the terminal device 20 is present (Step S43). The data that has reached the base station device 30 is stored in a predetermined buffer arranged in the base station device 30.

The SCI that indicates the location of the first resource is detected by the base station device 30. The base station device 30 uses the SCI indicating the location of the first resource and judges whether the reception quality of the data in the terminal device 20 is favorable. When it is judged that the reception quality of the data in the terminal device 20 is not favorable, the base station device 30 selects the second resource that is not overlapped with the first resource (Step S44). Then, the base station device 30 transmits the data stored in the buffer to the terminal device 20 by using the selected second resource and transmits the DCI that indicates the location of the second resource to the terminal device 20 together with the data (Step S45). Furthermore, at Step S45, the DCI that indicates the location of the second resource is transmitted via the PDCCH and the data is transmitted via the PDSCH.

Consequently, even in a case in which the reception quality of the data in the terminal device 20 is not favorable, it is possible to stably transmit the data from the base station device 30 to the terminal device 20. As a result, it is possible to implement higher reliable V2X communication.

Furthermore, in the third to the fifth embodiments described above, the terminal device 10 does not always need to use the second resource designated by the management terminal device 60 (using the SCI) to perform retransmission (repetition) on the data. For example, the terminal device 10 may also supplementarily use the information on the second resource designated by the management terminal device 60 and determine the resource that is used for repetition.

Furthermore, in the explanations above, an individual configuration and operation have been described in each of the embodiments have been described. However, the wireless communication systems 1 and 1A according to the corresponding embodiments described above may also additionally have a component that is unique to the other embodiments. Furthermore, regarding a combination of each of the embodiments, the combination is not limited to two and any combinations, such as three or more combinations, may also be used. For example, the base station device 30 according to the first embodiment may also dynamically change, at predetermined timing, the ratio of the size of the first resource pool to which the first resource for transmission of the data belongs to the size of the second resource pool to which the second resource for retransmission of the data belongs.

### Hardware Configuration

The terminal device 10 according to the first to the fifth embodiments can be implemented by, for example, the following hardware configuration. FIG. 13 is a diagram illustrating an example of the hardware configuration of the terminal device 10. As illustrated in FIG. 13, the terminal device 10 includes a central processing unit (CPU) 10a, a memory 10b, and a radio frequency (RF) circuit 10c that includes an antenna A1. The memory 10b is constructed by, for example, a random access memory (RAM), such as a synchronous dynamic random access memory (SDRAM); a read only memory (ROM); and a flash memory. The buffer unit 14 is implemented by, for example, the memory 10b. The resource selecting unit 11 and the resource selecting units 16 and 116 are implemented by, for example, the CPU 10a. The SCI transmitting units 12 and 112, the data transmitting unit 13, the DCI receiving units 15 and 65, the SCI receiving units 115 and 215, and the repetitive transmitting units 17, 67, 117, and 217 are implemented by, for example, the CPU 10a and the RF circuit 10c.

Furthermore, the base station device 30 according to the first and the second embodiments can be implemented by, for example, the following hardware configuration. FIG. 14 is a diagram illustrating an example of the hardware configuration of the base station device 30. As illustrated in FIG. 14, the base station device 30 includes a digital signal processor (DSP) 30a, a field programmable gate array (FPGA) 30b, a memory 30c, an RF circuit 30d, and a network interface (IF) 30e. The DSP 30a and the FPGA 30b are connected via the network IF 30e, such as a switch, so as to be capable of inputting and outputting various kinds of signals or data. The RF circuit 30d includes the antenna A2. The memory 30c is constructed by, for example, a RAM, such as an SDRAM, a ROM, and a flash memory. The reception quality judging unit 32 and the resource selecting units 33 and 73 are implemented by, for example, the DSP 30a and the FPGA 30b. The SCI detecting unit 31 and the DCI transmitting units 34 and 74 are implemented by, for example, the RF circuit 30d, the DSP 30a, and the FPGA 30b.

Furthermore, the management terminal device 60 according to the third to the fifth embodiments described above can be implemented by, for example, the following hardware configuration. FIG. 25 is a diagram illustrating an example of a hardware configuration of the management terminal device 60. As illustrated in FIG. 25, the management terminal device 60 includes a CPU 60a, a memory 60b, and a RF circuit 60c that includes an antenna A3. The memory 60b is constructed by, for example, a RAM, such as an SDRAM, a ROM, and a flash memory. The reception quality judging unit 32 and the resource selecting units 33, 233, and 333 are implemented by, for example, the CPU 60a. The SCI detecting unit 31 and the SCI transmitting units 134 and 234 are implemented by, for example, the CPU 60a and the RF circuit 60c.

### [Explanation of Reference]

- 1, 1A: wireless communication system
- 10, 20: terminal device
- 11: resource selecting unit
- 12, 112: SCI transmitting unit
- 13: data transmitting unit
- 14: buffer unit
- 15, 65: DCI receiving unit
- 16, 116: resource selecting unit
- 17, 67, 117, 217: repetitive transmitting unit
- 31: SCI detecting unit
- 32: reception quality judging unit
- 33, 73, 233, 333: resource selecting unit
- 34, 74: DCI transmitting unit
- 60: management terminal device
- 115, 215: SCI receiving unit
- 134, 234: SCI transmitting unit

## Claims

1. A terminal device comprising:
a selecting unit that autonomously selects a first resource for transmission of data from among a plurality of resources;
a first transmitting unit that transmits the data to another terminal device by using the first resource;
a receiving unit that receives control information that has been transmitted from a wireless communication device capable of performing communication with the own terminal device and that designates a second resource that is not overlapped with the first resource; and
a repetitive transmitting unit that retransmits the data to the other terminal device by using the second resource designated by the control information.

2. The terminal device according to claim 1, wherein the wireless communication device is a base station device or a management terminal device that manages the terminal device and the other terminal device.

3. The terminal device according to claim 1, wherein, when the control information that designates the second resource is not received before a predetermined period of time has elapsed after an initial transmission of the data, the repetitive transmitting unit autonomously selects a third resource for retransmission of the data from among the plurality of resources and retransmits the data by using the third resource.

4. The terminal device according to claim 1, wherein, when the control information that designates the second resource is not received before a predetermined period of time has elapsed after an initial transmission of the data, the repetitive transmitting unit stops retransmitting the data.

5. The terminal device according to any one of claims 1 to 4, further comprising a second transmitting unit that transmits control information indicating a location of the first resource to the other terminal device, wherein
the control information indicating the location of the first resource is detected by the wireless communication device, and
the wireless communication device judges whether reception quality of the data in the other terminal device is favorable by using the control information indicating the location of the first resource and transmits, when the reception quality of the data is not favorable, control information that designates the second resource.

6. The terminal device according to claim 5, wherein the second transmitting unit transmits the control information indicating the location of the first resource to the wireless communication device via a control channel of an uplink or a sidelink.

7. The terminal device according to claim 1, wherein
the receiving unit receives the control information that has been transmitted from the wireless communication device and that designates the second resource or control information that has been transmitted from the wireless communication device and that designates autonomous selection of a third resource for retransmission of the data, and
when the control information that designates autonomous selection of the third resource is received, the repetitive transmitting unit autonomously selects the third resource from among the plurality of resources and retransmits the data by using the third resource.

8. A wireless communication device comprising:
a judging unit that judges, when a terminal device capable of performing communication with the own wireless communication device transmits data to another terminal device by using a first resource, whether reception quality of the data in the other terminal device is favorable;
a selecting unit that selects, when it is judged that the reception quality of the data is not favorable, a second resource that is used by the terminal device to retransmit the data and that is not overlapped with the first resource; and
a transmitting unit that transmits control information that designates the second resource to the terminal device.

9. The wireless communication device according to claim 8, wherein the wireless communication device is a base station device or a management terminal device that manages the terminal device and the other terminal device.

10. The wireless communication device according to claim 8, wherein
when it is judged that the reception quality of the data is favorable, the selecting unit stops selecting the second resource, and
when selection of the second resource is stopped, the transmitting unit transmits control information that designates autonomous selection of a third resource for retransmission of the data to the terminal device.

11. The wireless communication device according to claim 8, wherein
a first resource pool to which the first resource belongs and a second resource pool to which the second resource belongs are split from a common resource pool that has a constant size, and
the selecting unit changes a ratio of a size of the first resource pool to a size of the second resource pool at predetermined timing.

12. A wireless communication system comprising:
a wireless communication device;
a first terminal device; and
a second terminal device, wherein
the first terminal device includes
a selecting unit that autonomously selects a first resource for transmission of data from among a plurality of resources,
a transmitting unit that transmits the data to the second terminal device by using the first resource,
a receiving unit that receives control information that has been transmitted from the wireless communication device and that designates a second resource that is not overlapped with the first resource, and
a repetitive transmitting unit that retransmits the data to the second terminal device by using the second resource designated by the control information, and
the wireless communication device includes
a judging unit that judges whether reception quality of the data in the second terminal device is favorable,
a selecting unit that selects the second resource when it is judged that the reception quality of the data is not favorable, and
a transmitting unit that transmits the control information that designates the second resource to the first terminal device.

13. A wireless communication method used in a wireless communication system that includes a wireless communication device, a first terminal device, and a second terminal device, the wireless communication method comprising:
selecting autonomously, performed by the first terminal device, a first resource for transmission of data from among a plurality of resources;
transmitting, performed by the first terminal device, the data to the second terminal device by using the first resource;
receiving, performed by the first terminal device, control information that has been transmitted from the wireless communication device and that designates a second resource that is not overlapped with the first resource;
retransmitting, performed by the first terminal device, the data to the second terminal device by using the second resource designated by the control information;
judging, performed by the wireless communication device, whether the reception quality of the data in the second terminal device is favorable;
selecting, performed by the wireless communication device, the second resource when it is judged that the reception quality of the data is not favorable; and
transmitting, performed by the wireless communication device, the control information that designates the second resource to the first terminal device.
